# EUROPEAN PATENT APPLICATION

(11) **EP 4 811 735 A1**
(43) Date of publication of application: **23.09.2026**
(21) Application number: 26165438.8
(22) Date of filing: 17.03.2026
(51) Int. Cl.: H04L 41/0631, H04L 41/12, H04L 41/16, H04L 41/22

(54) **ARTIFICIAL INTELLIGENCE-POWERED STATE OF NETWORK**

(30) Priority: 17.03.2025 US 202563773167 P
(71) Applicant: Google LLC, Mountain View, CA 94043 (US)
(72) Inventor: SHARMA, Anurag, Mountain View, California, 94043 (US); LI, Jeremy Zihan, Mountain View, California, 94043 (US); RAMÍREZ, César Juárez, Mountain View, California, 94043 (US); PEDNEKAR, Aniket Vidyadhar, Mountain View, California, 94043 (US); WEADICK, Alan, Mountain View, California, 94043 (US); MARZUOLI, Aude Claire, Mountain View, California, 94043 (US)
(74) Representative: Betten & Resch

(57) **Abstract**

The technology is directed to systems, methods, and computer-readable mediums for identifying anomalies on a network. One or more temporal network graphs representative of the network may be constructed. One or more anomalies with the network may be identified by one or more GNNs based on the one or more temporal network graphs. The one or more anomalies may be output to a frontend interface.

## Description

### CROSS-REFERENCE TO RELATED APPLICATION

The present application claims the benefit of the filing date of U.S. Provisional Patent Application No. 63/773,167, filed March 17, 2025, the disclosure of which is hereby incorporated herein by reference.

### BACKGROUND

Modem networks are complex, heterogeneous systems. They comprise multiple networking layers, diverse business processes, and various networking domains (e.g., access, core, data center, radio access network (RAN), etc.). Networks also often contain a mix of legacy and more modern equipment, along with disparate Element Management Systems (EMS) and Network Management Systems (NMS) integrated through acquisitions and organic growth. This complexity makes it extremely challenging to monitor the overall state of the network (SOTN) effectively.

Identifying anomalies, failures, networking process issues, and policy violations across a heterogeneous network is difficult. Traditionally, network operators have relied on multiple, often siloed, monitoring systems. These systems typically utilize a combination of device alarm monitoring, alarm correlation, and rule-based or time-series-based traffic anomaly detection. However, these systems are frequently point solutions, custom-built for specific network segments. Moreover, these systems often generate a large volume of raw signals, frequently leading to slow anomaly detection and a high rate of false positives. To filter noise and highlight actionable network anomalies, these systems often rely on rule-based or heuristic solutions. Creating comprehensive reports detailing the most impactful incidents remains a manual, time-consuming process, requiring network administrators or other subject matter experts to manually select and prioritize key events.

### SUMMARY

The technology described herein is directed to a state of the network (SOTN) system that analyzes heterogeneous temporal network graphs that represent the network as a complex system. The temporal network graphs incorporate data from diverse sources, including operational and planning topologies, business process states, telemetry, unstructured data, repair records, and vendor communications. Different network aspects are modeled as nodes and edges, each with associated features, within the temporal network graphs. The SOTN system captures large volumes of data periodically and/or continuously, creating a digital-twin representation of the physical network. The SOTN system leverages graph neural networks (GNNs), which are machine learning models trained on the data within heterogeneous temporal graphs. Specifically, these GNNs are trained to identify the complex characteristics of a network and identify anomalies within the network. Suitable GNN architectures for learning these complex system characteristics include, but are not limited to, autoencoders. Post-training, these GNNs may be deployed for real-time inference on a heterogeneous temporal graph, to detect anomalies across various network components.

The SOTN system provides a unified, real-time view of network health by leveraging a novel combination of temporal heterogeneous graphs with GNNs and graph AI. This allows for proactive identification and analysis of a wide range of network anomalies, from hardware failures to policy violations, significantly improving upon traditional, fragmented monitoring approaches. The system also facilitates root cause analysis through dependency graphs, explainable AI, and user feedback integration for continuous learning.

An aspect of the disclosure is directed to a system comprising one or more computer processors and memory in communication with the one or more computer processors. The memory stores instructions that when executed by the one or more computer processors causes the one or more computer processors to: construct one or more temporal network graphs representative of the network; identify, using a graph neural network (GNN), one or more anomalies within the network based on the one or more temporal network graphs; and output the one or more anomalies to a frontend interface.

In some instances, the GNN is trained, using one or more other temporal network graphs to identify anomalies on a network.

In some instances, the instructions further comprise training the GNN.

In some instances, the frontend interface provides a real-time overview of the network.

In some instances, the instructions further cause the one or more processors to generate SOTN reports that provide information related to the one or more anomalies detected by the GNN.

In some instances, the frontend interface provides modules including one or more of autonomous anomaly detection, dependency graph & states, anomaly insights, anomaly explainability, or chat assistant.

In some instances, the autonomous anomaly detection module is configured to output an indication of the one or more anomalies within the network.

In some instances, the dependency graph & states module is configured to provide a visual representation of states of network entities positioned upstream or downstream of a network device associated with at least one of the one or more anomalies.

In some instances, the anomaly insights module is configured to provide natural language insights about detected anomalies.

In some instances, the anomaly explainability module is configured to provide various visualizations associated with detected anomalies

Another aspect of the technology is directed to a method for determining and providing network anomaly information, the method comprising: constructing, by one or more processors, one or more temporal network graphs representative of the network; identifying, by the one or more processors, using a graph neural network (GNN), one or more anomalies within the network based on the one or more temporal network graphs; and outputting, by the one or more processors, the one or more anomalies to a frontend interface.

In some instances, wherein the GNN is trained, using one or more other temporal network graphs to identify anomalies on a network.

In some instances, the method further comprises training the GNN.

In some instances, the frontend interface provides a real-time overview of the network.

In some instances, the method further comprises generating SOTN reports that provide information related to the one or more anomalies detected by the GNN.

In some instances, the frontend interface provides modules including one or more of autonomous anomaly detection, dependency graph & states, anomaly insights, anomaly explainability, or chat assistant.

In some instances, the autonomous anomaly detection module is configured to output an indication of the one or more anomalies within the network.

In some instances, the dependency graph & states module is configured to provide a visual representation of states of network entities positioned upstream or downstream of a network device associated with at least one of the one or more anomalies.

In some instances, the anomaly insights module is configured to provide natural language insights about detected anomalies.

In some instances, the anomaly explainability module is configured to provide various visualizations associated with detected anomalies

### BRIEF DESCRIPTION OF THE DRAWINGS

FIG. 1 is a block diagram of generating a temporal network graph according to aspects of the disclosure.
FIG. 2 is a block diagram illustrating graph neural network(s) processing the temporal network graph of FIG. 1 according to aspects of the disclosure.
FIG. 3 is an illustration of a graph neural network according to aspects of the disclosure.
FIG. 4 illustrates embeddings of nodes and edges of the graph representation of FIG. 3 in multi-dimensional space according to aspects of the disclosure.
FIG. 5 is a timeline showing temporal changes to the graph representation of a computer network according to aspects of the disclosure.
FIG. 6 illustrates a GNN analyzing a temporal network graph to generate analysis, according to aspects of the disclosure.
FIG. 7 depicts a flow diagram of an example process for generating analysis by a GNN, according to aspects of the disclosure.
FIG. 8 depicts a frontend interface of a state of the network system, according to aspects of the disclosure.
FIG. 9 is an illustration of a dependency graph & anomalies module of a frontend of a state of the network system, according to aspects of the disclosure.
FIG. 10 is a flow diagram illustrating a process for generating anomaly insights according to aspects of the disclosure.
FIG. 11 is a block diagram of a GNN system according to aspects of the disclosure.
FIG. 12 depicts a block diagram of an example environment for a state of the network system according to aspects of the disclosure.
FIG. 13 depicts a block diagram illustrating one or more model architectures for a state of the network management system according to aspects of the disclosure.

### DETAILED DESCRIPTION

The technology described herein is directed to systems, methods, and computer-readable mediums for identifying anomalies on a network. One or more temporal network graphs representative of the network may be constructed. One or more anomalies with the network may be identified by one or more GNNs based on the one or more temporal network graphs. The one or more anomalies may be output to a frontend interface. The technology described herein provides a state of the network system that leverages machine learning (ML) models, such as graph neural networks (GNNs), deployed for real-time inference on the temporal network graphs, to detect anomalies across various network components and provide status information of the network. The SOTN system may provide a unified, real-time view of network health that allows for proactive identification and analysis of a wide range of network anomalies, such as those from hardware failures to policy violations, significantly improving upon traditional, fragmented monitoring approaches. The SOTN system may also facilitate root cause analysis through dependency graphs, explainable AI, and user feedback integration for continuous learning, as further described herein.

The GNNs used by the SOTN system may be trained on temporal network graphs. Temporal network graphs, also referred to herein as temporal digital twins, are virtual models of networks. The models may include representations of network nodes and connections between network nodes, also called "edges." Temporal digital twins are generated using various types of network data, such as topology (e.g., nodes, connections, etc.) logs, incidents, support tickets, etc., which are integrated into a heterogeneous graph.

The network data can be continually updated so that one or more temporal digital twins are generated or otherwise updated to provide a dynamic model of the network that reflects the overall state of the network. In this regard, network data may be updated continuously or in regular or irregular time periods. For instance, the network data may be updated every second, minute, half hour, hour, day, or at any other period. In another example, network data may be updated only when the network data changes or a particular network operation, function, or event takes place, such as every time a node passes or receives network data. Temporal digital twin(s) can be updated or generated immediately upon new network data being received, such that the temporal digital twin(s) provides a real-time picture of the network. Alternatively or additionally, temporal digital twin(s) can be updated or generated at regular or irregular time periods, such that they provide an image of the network at a particular time or times.

Temporal digital twins can reflect historical, current, and/or future network states, each of which can include network planning, operations, and business processes. For example, a planned update to a network may be used to update a temporal digital twin such that it reflects the state of the network as if a planned update was implemented, even though the planned update is not implemented on the actual network. In other examples, the network data used to generate a temporal digital twin may be real-time data corresponding to a network such that the temporal digital twin reflects the current operating state of the network.

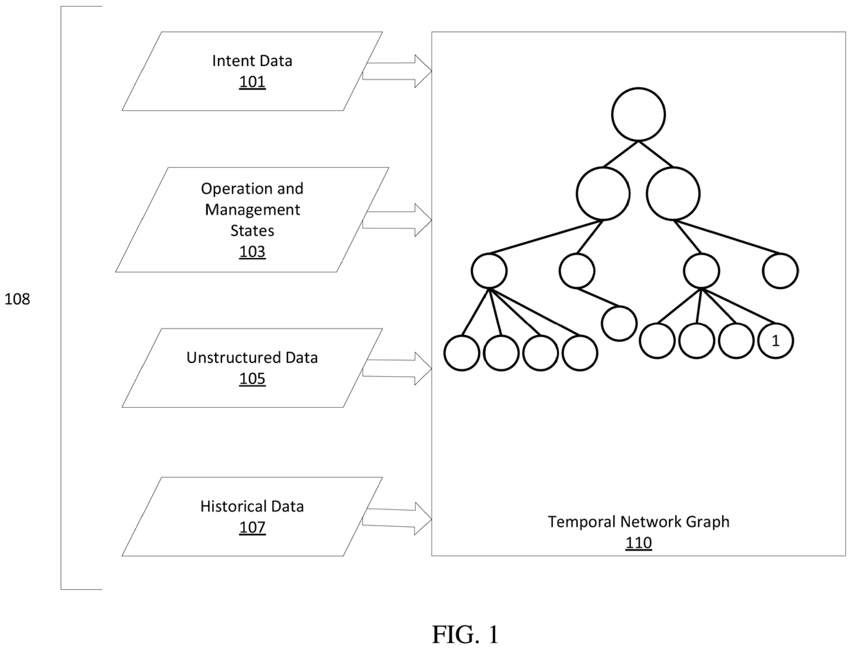

Fig. 1 is a flow diagram illustrating the generation of a temporal network graph 110 using network data 108. Although only a single temporal network graph 110 is shown, any number of temporal network graphs may be generated. As shown, network data 108 may include intent 101, operation and management states of the network 103, unstructured data 105, and historical data 107. The network data 101-107 may be used to generate temporal network graph 110, a temporal digital twin of a network. Although only a single temporal network graph is shown, any number of temporal network graphs may be generated using any combination of network data 101-107.

Intent data 101 may include data that represents planned changes or human interventions, such as maintenance activities for the network. Intent data may include expected operational parameters of the network. For example, intent data 101 may include data that represents planned link capacities (e.g., in GB/s, Gbps, MB/s, Mbps, etc.), expected latencies, and expected network states such as operational and administrative states. Additionally, intent data could include expected device and card deployments, bug states (e.g., "bug pending, but should have been answered within 24 hours"), and having (or not having) critical or major alarms on the device.

Operation and management states of the network 103 may include data related to the real-time status of the intent data 101. For example, current/effective capacities, latencies, current bug state, current major and critical alarms/faults, currently deployed cards and devices, etc. Unstructured data 105 may include data that does not have a predefined format or structure. Examples of unstructured data include device logs, controller logs, syslogs, information in bug trackers or support tickets, device documentation/manuals, legal contracts (e.g., leased assets contracts), etc., corresponding to network devices

Historical data 107 may include telemetry data and labels. Examples of telemetry data include various counter types and values collected from devices, controllers, and other network entities. Such telemetry data provides insight into the operational state of equipment and programs. Examples of telemetry data may include packets transmitted/received, packets dropped, Pre-FEC BER, and other such counter types. The historical data, like other network data 108, may be collected periodically, or in real-time, such as when pushed by the network entities.

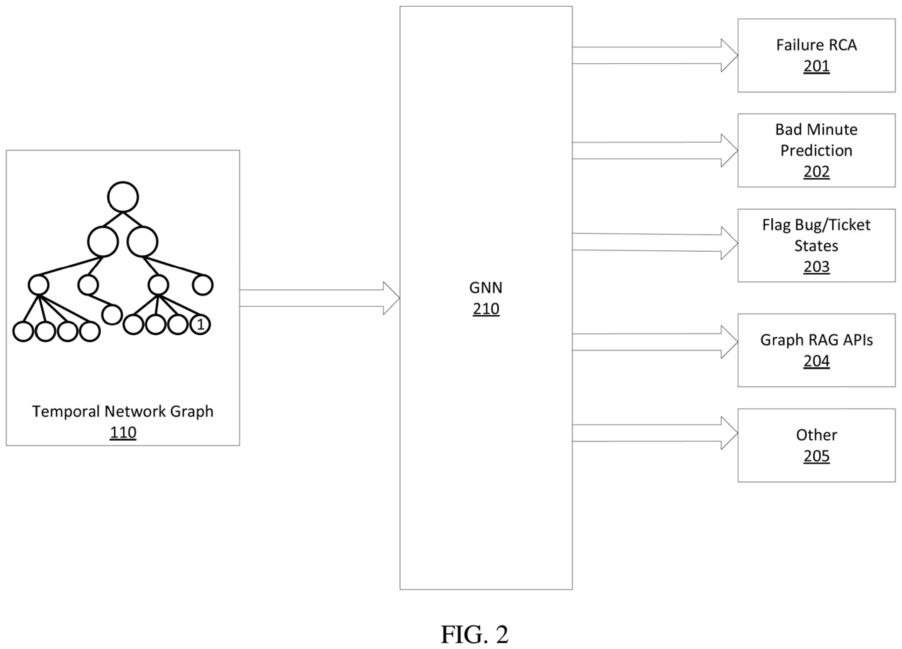

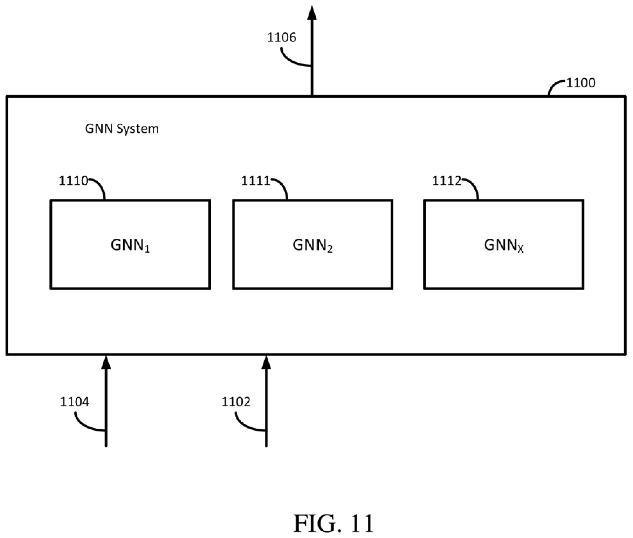

A machine learning model may be trained, utilizing temporal digital twins, such as temporal network graph 110, to generate a state of the network overview and identify potential problems with the network, such as outages, device failures, etc. FIG. 2 is a flow diagram illustrating machine learning models, including GNN 210, using temporal network graph 110 to predict or identify issues within a network. Although FIG. 2 illustrates a single GNN 210, any number of GNNs may be trained. For instance, and as shown in FIG. 2, GNN 210 may be trained to identify failure root cause analysis (RCA) 201, bad minute prediction 202, flag bug and/or ticket states 203, graph retrieval augmented generation (RAG) APIs 204, and other issues, as illustrated by block 205. GNN 210 may be part of a GNN system, such as GNN system 1100 described with reference to FIG. 11 herein. In this regard, GNN 210 may be trained using the same or similar techniques to those described with reference to the GNNs of GNN system 1110.

An example failure RCA 201 may be a router, port, or other network entity that is the root cause of a network issue. In some examples, the root cause of a network issue may be software-related, such as a new software update.

A bad minute prediction 202 refers to traffic impacted between locations (or some A-End and Z-End entities within the network). This impact is captured in the form of bad minutes 202.

Flag bug and/or ticket states 203 refers to bugs and tickets that might not be in their expected state. Flag bug and/or ticket state 203 may include correspondence or data associated with vendors that may not include all information that is required by or from the vendors.

RAG APIs 205 refers to the ability of a user to ask questions in natural language and receive responses from the graph entities and its neighbors.

Graph neural networks, such as GNN 210, excel at deciphering the complex relationships within heterogeneous graphs, such as temporal digital twins. Thus, GNNs are well suited to identify network traffic patterns, network device behaviors, and anomalies within a network that may indicate an impending problem. The GNNs may be trained using supervised or self-supervised learning. Through training, GNN models can develop deep network expertise by analyzing historical data, enabling them to predict and prevent future issues.

GNNs are also well suited to adaptively learn to identify unexpected events, and optimize network performance. This adaptability is well suited for operation in dynamic environments, such as large-scale networks, which are typically subjected to evolving demands from cloud computing, new architectures, and emerging applications.

GNN 210 may be trained using temporal digital twins. In this regard, based on the data included in the temporal digital twins, such as network intent, real-time operational and management information, unstructured data, and historical data, GNN 210 may determine relationships between different aspects of the converged network, including planning, operations, and business processes.

Additionally, GNN 210 may be trained to identify both healthy and failure states within the network by analyzing historical data and generating representative embeddings, as discussed further herein. These learned embeddings can then be used to identify issues within the network, such as outages or degradations in network performance.

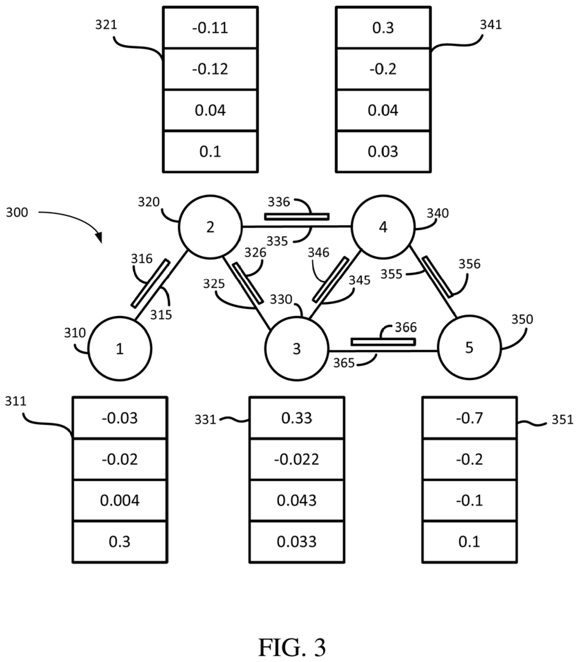

FIG. 3 illustrates an example of embeddings of a GNN where the GNN is trained to generate node embeddings using message passing. The temporal network graphs consist of multiple snapshots taken at different times. The GNN can be trained using these multiple snapshots from the temporal network graphs.

As shown in FIG. 3, network entities of network 300 include nodes 310, 320, 330, 340, and 350 and edges 315, 325, 335, 345, 355, and 365. The nodes 310, 320, 330, 340, 350 represent network devices or entities, while edges 315, 325, 335, 345, 355, and 365 define connections between the network devices or entities. For example, edge 315 represents a connection between nodes 310 and 320, while edge 335 represents a connection between nodes 320 and 340. Although only five nodes and six edges are shown in network 300, a network may include any number of edges and nodes.

In some embodiments, a GNN may be generated from subsets of nodes and/or edges of a network. For instance, a first GNN may be generated for a first portion of a network, a second GNN may be generated for a second portion of a network, and a third GNN may be generated for the entire network, which may include the first and second portions.

As further shown in FIG. 3, each node 310, 320, 330, 340, 350 is associated with a corresponding embedding 311, 321, 331, 341, 351, respectively. Embeddings 311, 321, 331, 341, 351 capture state information of the corresponding node and attached edges in high-dimensional space. Embeddings 311, 321, 331, 341, 351 encode information related to attributes and structural information of the nodes and edges associated with a given node. Embeddings 311, 321, 331, 341, 351 may provide structural information regarding components that make up the network. Attributes can include settings and parameters associated with the network device associated with a node and/or edges associated with a given node. Additionally, operating states, including network traffic metrics and management states, may be used to establish appropriate embeddings.

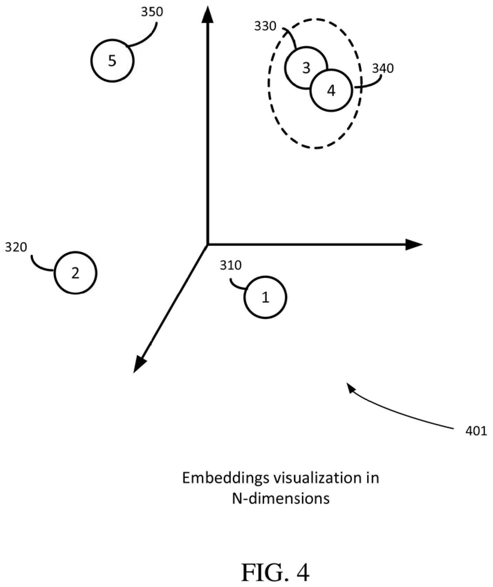

As the network model evolves, the GNN may be updated over time. In this regard, messages 316, 326, 336, 346, 356, and 366 are communicated between nodes 310, 320, 330, 340, 350 to provide context and semantic information, which is used to update the embeddings 311, 321, 331, 341, 351. Referring to the embeddings 311, 321, 331, 341, 351, a visualization 401 of nodes 310, 320, 330, 340, 350 may be generated in n-dimensional space. Nodes having similar embeddings, for example a network device of the same make, model and configuration settings will inhabit similar spaces in the visualization 401, as shown in FIG. 4. As seen in the visualization 401, node 330 and node 340 are proximate to each other, signifying that node 330 and node 340 are similar nodes sharing similar contexts within the network.

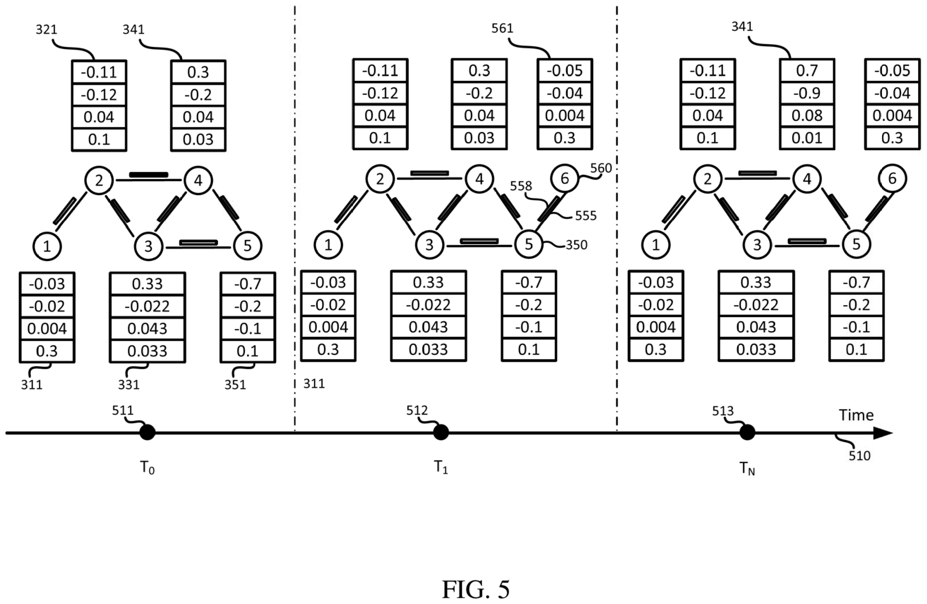

FIG. 5 illustrates the changes over time in the GNN embeddings of FIG. 3. FIG. 5 illustrates an evolution of the GNN along timeline 510. The evolution occurs as network changes occur at times T₀ 511, T₁ 512, and T_{N} 513. At time T₁ 512, an additional node 560 is added to the network along with its associated edge 555 and messaging pathway 558 connecting node 560 to node 350. A new embedding 561 is associated with the new node 560. At later time T_{N} 513, it is observed that the values in the embedding 341 associated with node 340 have changed. Embedding may be leveraged by the machine learning models described herein, such as GNN 210, to predict the effects of human-initiated actions or other problems with the network and applying that knowledge to automatically generate corrective actions, such as alerting a network manager or altering the operation of the network to account for the predicted network problems. For instance, an embedding may be expected to have a particular value, and if the embedding is not that particular value or a threshold amount away from the particular value, the GNN may determine a problem has occurred or will occur.

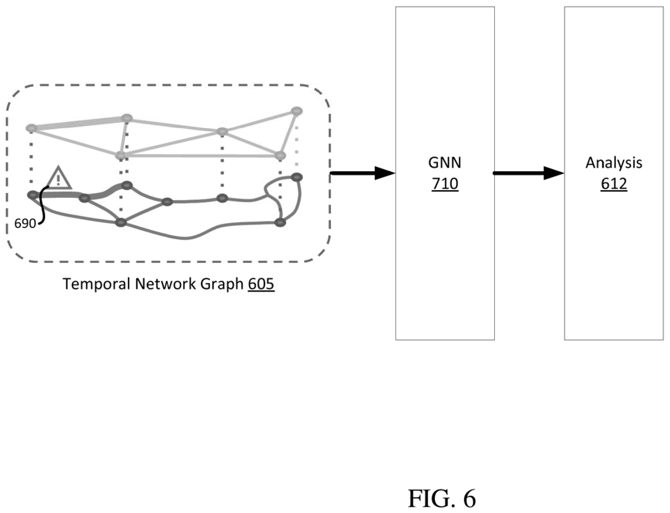

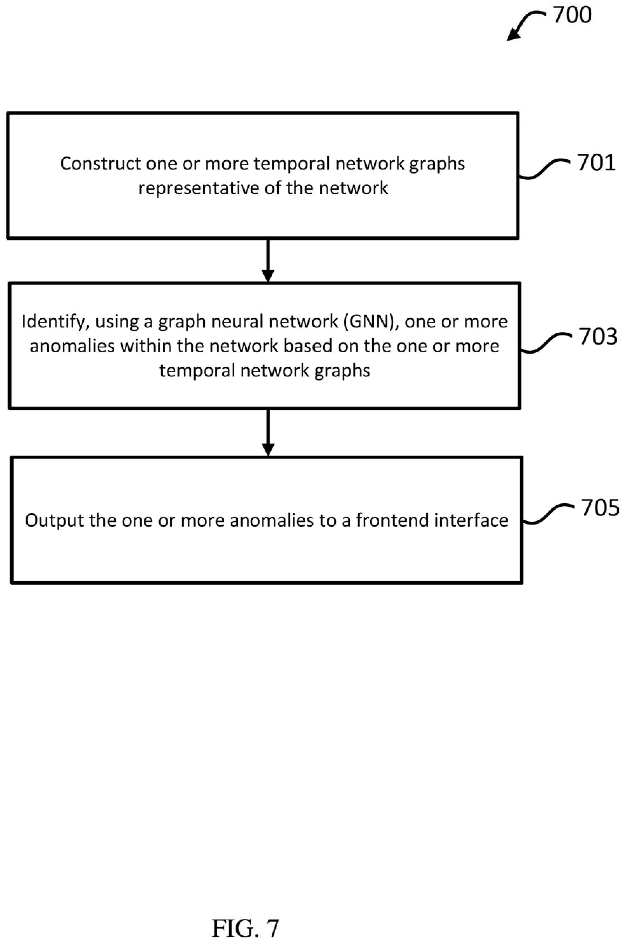

FIG. 6 illustrates a temporal network graph 605 being generated and input into a GNN 710, which may be compared to GNN 210, to identify the state of the network and identify potential problems (anomalies) on the network. FIG. 7 is a flow diagram 700 outlining the steps shown in FIG. 6. GNN 710 may be part of a GNN system, such as GNN system 1100 described with reference to FIG. 11 herein. In this regard, GNN 710 may be trained using the same or similar techniques to those described with reference to the GNNs of GNN system 1110.

As shown in block 701 of FIG. 7, one or more temporal network graphs are generated. Referring to FIG. 7, a single temporal network graph 605 is generated. Temporal network graph 605 represents the real-time network state of a network having two layers and depicts the complex relationships between different elements in the network. As shown by triangle 690, an anomaly is occurring on an edge of one of the layers.

As shown in block 703 of flow diagram 700 of FIG. 7, a graph neural network is used to identify anomalies within the network. In this regard, and as shown in FIG. 6, the temporal network graph 605 is provided to GNN 710, which may be compared to GNN 210. GNN 710 may analyze the data corresponding to the temporal network graph 605, such as the embeddings, and identify anomalies across portions, parts, components, etc., of the network.

Consistent with block 705 of FIG. 7, the GNN may provide such analysis for an operator to address or automatically take actions to mitigate or remove through a frontend interface of a state of the network system. In this regard, the analysis 612 generated by the GNN 710 is output, as further shown in FIG. 6. For instance, the GNN 710 may detect anomaly 690 and output such.

Although a single temporal network graph 605 is shown as being provided to GNN 710, any number of temporal network graphs may be provided to the GNN 710. Moreover, although FIG. 6 illustrates only a single GNN 710, any number of GNNs may be used to process the temporal network graphs and/or temporal network graphs. Each GNN may be trained to identify particular failures or network safety risks using temporal network graphs.

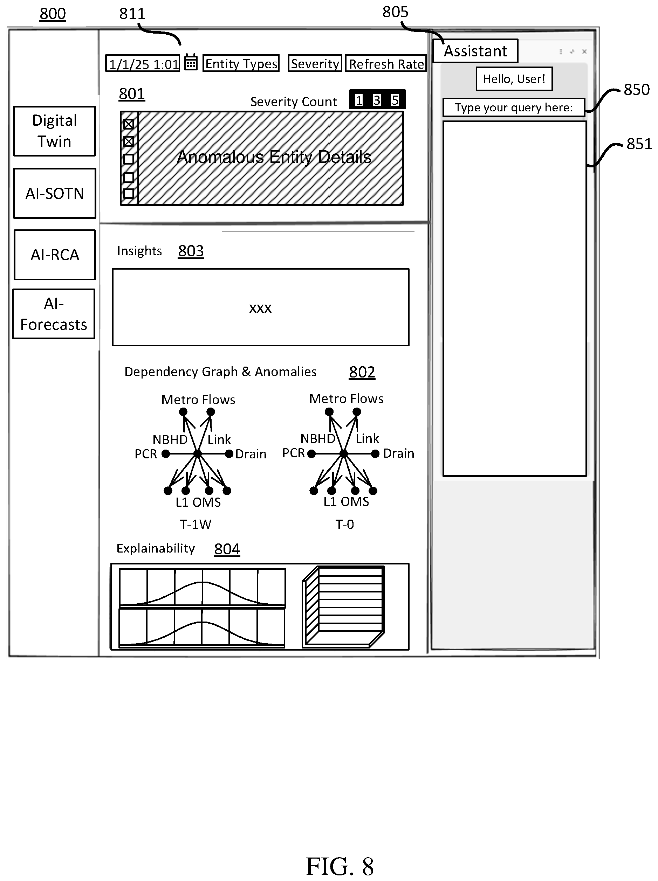

FIG. 8 depicts an example frontend 800 of an SOTN system. The frontend 800 provides an integrated, human readable view of the analysis conducted by a GNN, such as GNN 710. The frontend 800 provides a unified, real-time view of network health by leveraging a novel combination of temporal heterogeneous graphs with GNNs and Graph AI. This allows for proactive identification and analysis of a wide range of network anomalies, from hardware failures to policy violations, significantly improving upon traditional, fragmented monitoring approaches. The system also facilitates root cause analysis through dependency graphs, explainable AI, and user feedback integration for continuous learning.

As shown in FIG. 8, the frontend 800 includes discrete modules including autonomous anomaly detection 801, dependency graph & states 802, anomaly insights 803, anomaly explainability 804, and chat assistant 805. Although not shown, the SOTN system may also provide users the ability to generate SOTN reports for various time periods and review and provide feedback for anomalies detected by the GNN (e.g., correct/incorrect detection.)

The time periods the modules and other aspects of the SOTN may conduct analysis, review, and/or provide feedback may be selected by the user of the frontend 800. In this regard, a user may set a time period using time/date selector 811. For instance, a user may use the time/date selector 811 to instruct the SOTN system to analyze, review, and/or provide feedback between a first date/time and a second date/time. In another example, a user may use the time/date selector 811 to instruct the SOTN system to analyze, review, and/or provide feedback for a particular date/time. Additionally, the user may select to have the SOTN system analyze, review, and/or provide feedback for real-time data.

The autonomous anomaly detection module 801 of frontend of the SOTN system 800, may output anomalies identified across various network components. In this regard, the trained AI/ML models, such as GNN 710, may run in real-time on the temporal network graphs and identify anomalies based on the data contained in the temporal network graphs. These anomalies may encompass hardware failures, virtual device failures, fiber issues (including cuts), and other data plane and control plane problems. The anomalies may also include violations of operational processes and policies, as well as issues with bugs and tickets (analyzing associated unstructured data such as workforce and vendor communications e.g., incomplete bug reports). In essence, autonomous anomaly detection module 801 constitutes a component that detects and displays anomalies for a wide range of network entities. The anomaly detection output may also include anomalous entity features (real-time or time-series based), features of neighboring entities, and other attributes like anomaly duration.

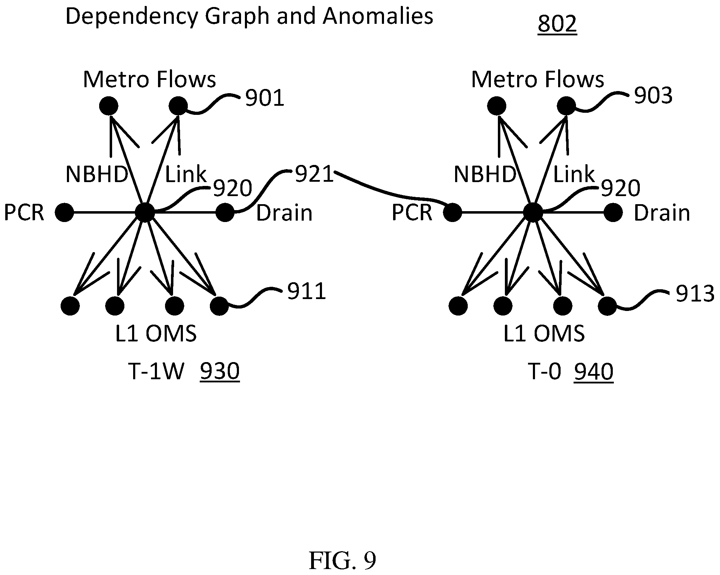

The dependency graph & states module 802 of frontend of the SOTN system 800 provides a visual representation of the states of network entities positioned upstream or downstream of an anchored-anomalous-network entity. In this regard, for each entity type within the heterogeneous temporal network graph, operators can define a dependency graph template, using an anomalous entity as the anchor. This template may specify the entity types and network components that will be displayed in relation to the anchored entity. For instance, and as shown in FIG. 9, the dependency graph includes: (1) upstream entities 901, 903 that the anchored entity 920 depends on, (2) downstream entities 911, 913 that depend on the anchored entity 920, and (3) other associated entity types 921. This configurable graph allows operators to filter out irrelevant entity types or networking layers, including those considered too granular for monitoring.

Once a dependency graph template is defined, it can be applied to any detected anomaly. The anomalous entity becomes the anchor, and the dependency graph is populated based on the template. The system retrieves entities and their associated features from the temporal network graph (digital twin). These features include entity states, as determined and updated in real-time by the ML models. The dependency graph provides a comprehensive view of the network surrounding the anchored entity. Furthermore, dependency graph may facilitate alarm correlation by propagating alarms from granular entities to higher-level entities included in the dependency graph. In addition to real-time dependency graphs, such as dependency graph 940, dependency graphs showing times in the past, such as dependency graph 930 may also be generated by the dependency graph & states module 802 of the frontend.

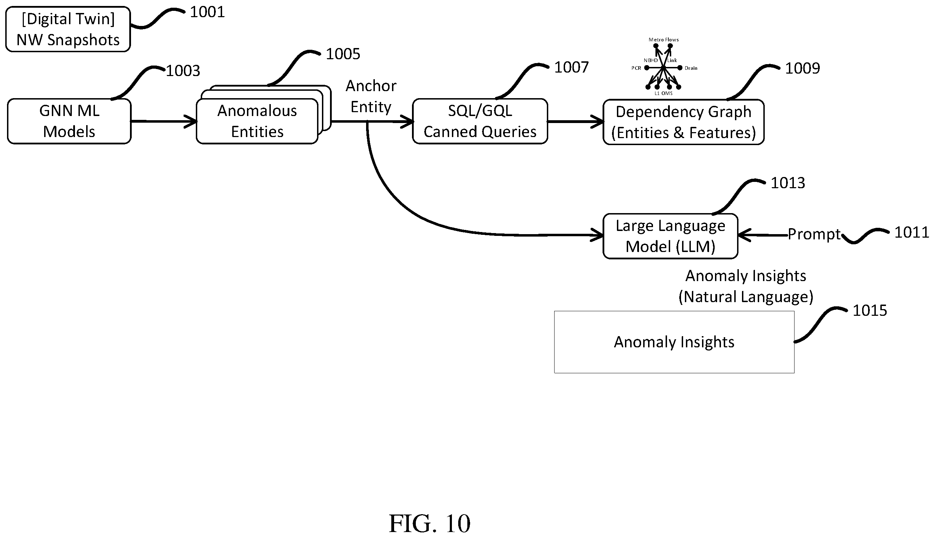

The anomaly insights 803 module of frontend of the SOTN system 800 provides operators with natural language insights about detected anomalies. These insights are generated using graph AI, which applies AI/ML techniques to graph-structured data to identify, analyze, and make predictions about relationships and patterns within networks of interconnected entities (e.g., entities within temporal network graphs). The graph AI process is provided with: the anomalous (anchor) node's details (including features and anomaly state), and the dependency graph. The dependency graph may include some or all node features and states). The inputs to the graph AI and underlying LLM may also incorporate temporal information about the anchor entity and its dependencies. The LLM may then synthesize the anomaly insights based on the provided prompt and contextual information. The process for generating anomaly insights is shown in FIG. 10.

The anomaly explainability module 804 is configured to help operators understand the ML models output. In this regard, the anomaly explainability module 804 provides explainability features, aiding in root cause analysis. These features include various visualizations, such as time-series plots of key features, and low-dimensional embeddings showing expected versus observed entity states. Explainability also extends to visualizations of neighboring entities or subgraphs whose states may influence the anomalous entity.

The chat assistant 805 module is shown on the right-hand side of frontend 800. The chat assistant includes an input section 850 and an output section 851. The input section 850 is configured to receive conversational inputs from a user. The output section 851 is configured to provide output from an artificial intelligence agent-the chat assistant-regarding specific anomalies or network anomalies in general in response to the conversational inputs from a user. For instance, a user may request additional information regarding a particular anomalous network entity, such as the current operating status via the input section 850, and the chat assistant may provide such information via the output section 851.

The frontend of the SOTN system 800 provides AI-Powered SOTN reports. The SOTN reports may be generated in real-time to provide real-time anomaly reports. Historical SOTN reports may also be generated to allow operators to review historical anomalies by selecting a past time period and replaying the network state. This historical analysis is enabled by the temporal graphs and state information generated by the ML models during inference. In addition to viewing the network state at a specific point in time, the SOTN system can generate reports for various durations (e.g., past hour, day, week). These reports may be created using techniques such as aggregating entity embeddings in a GNN, such as GNN 710, over the selected time period. The shift between expected and observed embeddings, reflecting anomaly severity, and the continuous tracking of this shift are key inputs for generating reports on the most impactful network anomalies, either across all or for selected entity types. Reports can also be generated using other methods, including tracking ML model reconstruction loss or applying custom heuristics.

The SOTN system may allow for user label collection. User label collection may improve model accuracy by receiving feedback from operators who review detected network anomalies. In this regard, feedback may mark false positives (incorrectly identified anomalies) as non-anomalous. This user-generated label data may be collected and used in subsequent ML model training cycles, leveraging semi-supervised learning techniques. Furthermore, operator input on any discrepancies reported by the model can be captured and incorporated as annotations within the temporal graph. Such feedback may be provided via the frontend 800, such as via a feedback input module.

Frontend 800 is merely an example illustration of layouts and organization of data and modules. It should be understood that the frontend 800 may include other modules, data, and layouts. For instance, the chat bot 805 may be positioned on the bottom of the frontend 800 and the anomaly explainability 804 may be at the top of the frontend 800.

FIG. 10 illustrates a process 1000 for generating anomaly insights using a Large Language Model (LLM) and graph-based data retrieval. The process initiates with the collection of network data to form a digital twin representation of the network, shown as network snapshots 1001 (labeled "[Digital Twin] NW Snapshots"). These snapshots 1001 may include data from diverse sources such as operational topologies, planning topologies, and telemetry data captured continuously or periodically.

These network snapshots 1001 may serve as input for the Graph Neural Network (GNN) machine learning models 1003. As described previously, these models 1003 may be trained to identify complex system characteristics and detect deviations from expected behavior. The execution of the GNN ML models 1003 results in the identification of a set of anomalous entities 1005. From this set, a specific entity is selected as an "anchor entity" for further analysis.

To generate specific context for the anchor entity, the system may utilizes database queries 1007, which are depicted as SQL (Structured Query Language) or GQL (Graph Query Language) canned queries. These queries 1007 utilize the anchor entity as a reference point to retrieve related network elements and construct a dependency graph 1009. This dependency graph 1009 populates the specific entities and features relevant to the anchor, including upstream entities, downstream entities, and their associated real-time states as determined by the ML models.

The generation of insights is performed by a Large Language Model (LLM) 1013, although other model types may be used. As depicted in FIG. 10, the LLM 1013 receives multiple distinct inputs to synthesize its output. First, the LLM 1013 receives the dependency graph 1009, which represents the complete graph structure surrounding the anchor, including node features and states. Second, the LLM 1013 receives the anchor entity details directly from the anomalous entities block 1005, providing specific feature data and the anomaly state of the selected entity. Third, a prompt 1011 is provided to the model, containing specific instructions or queries (e.g., "Analyze the network incident...") to guide the analysis.

Based on these aggregated inputs, the LLM 1013 synthesizes and outputs anomaly insights 1015 in natural language. The anomaly insights 1015 provide operators with a readable explanation of the network state, facilitating faster root cause analysis and resolution by transforming complex graph data into human-understandable text.

FIG. 11 depicts a block diagram of an example GNN system 1100, which can be implemented on one or more computing devices. The GNN system 1100 can be configured to receive inference data 1104 and/or training data 1102 for use in training and executing GNNs 1110-1112, which may be compared to GNNs 210 and 710. For example, the GNN system 1100 can receive the inference data 1104 and/or training data 1102 as part of a call to an application programming interface (API) exposing the GNN system 1100 to one or more computing devices. Inference data and/or training data can also be provided to the GNN system 1100 through a storage medium, such as remote storage connected to the one or more computing devices over a network. Inference data 1104 and/or training data 1102 can further be provided as input through a user interface on a client computing device coupled to the GNN system 1100.

The inference data 1104 can include data associated with temporal network graphs, including any of historical temporal network graphs corresponding to past network conditions and configurations, real-time temporal network graphs corresponding to current network conditions and configurations, and or future temporal network graphs corresponding to intended changes to network conditions and configurations.

The training data 1102 can correspond to an artificial intelligence (AI) or machine learning task for predicting potential issues and risks associated with changes to a network. Such training data may include temporal network graph data, including current, future, and/or past temporal network graphs. The training data 1102 can be split into a training set, a validation set, and/or a testing set. An example training/validation/testing split can be an 80/10/10 split, although any other split may be possible. The training data can include examples of issues and risks associated with changes to the network. Training data may include historical structured data relating to states of the system. This would include past experiences of issues such that the training data includes examples of normal system operations and abnormal conditions. Further prior resolutions of abnormal conditions may be contained in unstructured information such as past repair tickets, repair books, and previously identified root causes for the abnormal conditions. Relationships between these types of data are learned by the neural network and provide a basis for future detection, identification, and remediation of abnormalities that may be predicted to arise.

The training data 1102 can be in any form suitable for training a model, according to one of a variety of different learning techniques. Learning techniques for training a model can include supervised learning, unsupervised learning, and semi-supervised learning techniques. For example, the training data 1102 can include multiple training examples that can be received as input by a model. The training examples can be labeled with a desired output for the model when processing the labeled training examples. The label and the model output can be evaluated through a loss function to determine an error, which can be backpropagated through the model to update weights for the model. For example, if the machine learning task is a classification task, the training examples can be images labeled with one or more classes categorizing subjects depicted in the images. As another example, a supervised learning technique can be applied to calculate an error between outputs with a ground-truth label of a training example processed by the model. Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

The output data can include instructions associated with the predicted risk and/or issues with particular actions or events, whether human or non-human initiated. As an example, the GNN system 1100 can be configured to send the output data 1106 for display on a client or user display. As another example, the GNN system 1100 can be configured to provide the output data 1106 as a set of computer-readable instructions, such as one or more computer programs. The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement functionality described herein, for example, as performed by a system, engine, module, or model. The GNN system 1100 can further be configured to forward the output data 1106 to one or more other devices configured for translating the output data 1106 into an executable program written in a computer programming language. The GNN system 1100 can also be configured to send the output data 1106 to a storage device for storage and later retrieval.

From the inference data 1104 and/or training data 1102, the GNN system 1100 can be configured to output one or more results related to the effects a change may have on a network, as well as potential ways to mitigate or prevent changes that negatively affect the network, as output data. As examples, the output data can be any kind of score, classification, or regression output based on the input data. Correspondingly, the AI or machine learning task can be a scoring, classification, and/or regression task for predicting some output given some input. These AI or machine learning tasks can correspond to a variety of different applications in processing images, video, text, speech, or other types of data to predict risks and issues associated with network changes.

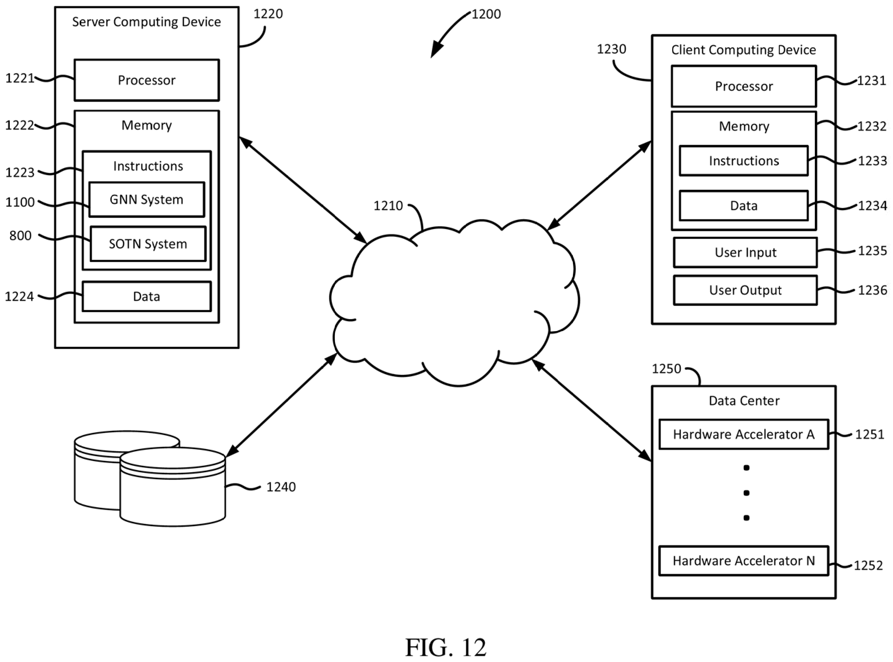

FIG. 12 depicts a block diagram of an example environment 1200 for implementing an GNN system 1100. The GNN system 1100 can be implemented on one or more devices having one or more processors in one or more locations, such as in server computing device 1220. Client computing device 1230 and the server computing device 1220 can be communicatively coupled to one or more storage devices 1240 over a network 1210. The storage devices 1240 can be a combination of volatile and non-volatile memory and can be at the same or different physical locations than the computing devices 1220, 1230. For example, the storage devices 1240 can include any type of non-transitory computer-readable medium capable of storing information, such as a hard-drive, solid state drive, tape drive, optical storage, memory card, ROM, RAM, DVD, CD-ROM, write-capable, and read-only memories. Although FIG. 12 illustrates a single network 1210, a single server computing device 1220, a single client computing device 1230, and a single data center 1250, the environment can include any number of computing devices, networks, and data centers.

The server computing device 1220 can include one or more processors and memory. The memory can store information accessible by the processors 1221, 1231, including instructions 1223, 1233 that can be executed by the processors 1221, 1231. The memory 1222, 1232 can also include data 1224, 1234 that can be retrieved, manipulated, or stored by the processors 1221, 1231. The memory 1222, 1232 can be a type of non-transitory computer-readable medium capable of storing information accessible by the processors, such as volatile and non-volatile memory. The processors can include one or more central processing units (CPUs), graphic processing units (GPUs), field-programmable gate arrays (FPGAs), and/or application-specific integrated circuits (ASICs), such as tensor processing units (TPUs).

The instructions 1223, 1233 can include one or more instructions 1223, 1233 that, when executed by the processors 1221, 1231, cause the one or more processors 1221, 1231 to perform actions defined by the instructions 1222, 1232. The instructions can be stored in object code format for direct processing by the processors 1221, 1231, or in other formats including interpretable scripts or collections of independent source code modules that are interpreted on demand or compiled in advance. The instructions 1222, 1232 can include instructions for implementing a GNN system 1100, which can correspond to the GNN system 1100 of FIG. 11 and a SOTN System 800, which can correspond to the SOTN system 800 illustrated in FIG. 8. The GNN system 1100 and SOTN System 800 can be executed using the processors, and/or using other processors remotely located from the server computing device 1220.

The data 1224, 1234 can be retrieved, stored, or modified by the processors 1221, 1231 in accordance with the instructions 1222, 1232. The data 1224, 1234 can be stored in computer registers, in a relational or non-relational database as a table having a plurality of different fields and records, or as JSON, YAML, proto, or XML documents. The data can also be formatted in a computer-readable format such as, but not limited to, binary values, ASCII, or Unicode. Moreover, the data can include information sufficient to identify relevant information, such as numbers, descriptive text, proprietary codes, pointers, references to data stored in other memories, including other network locations, or information that is used by a function to calculate relevant data.

The client computing device 1230 can also be configured similarly to the server computing device 1220, with one or more processors 1231, memory 1232, instructions 1233, and data 1234. The client computing device 1230 can also include a user input 1235 and a user output 1236. The user input 1235 can include any appropriate mechanism or technique for receiving input from a user, such as keyboard, mouse, mechanical actuators, soft actuators, touchscreens, microphones, and sensors.

The server computing device 1220 can be configured to transmit data to the client computing device 1230, and the client computing device 1230 can be configured to display at least a portion of the received data on a display implemented as part of the user output 1236. The user output 1236 can also be used for displaying an interface between the client computing device 1230 and the server computing device 1220. The user output 1236 can alternatively or additionally include one or more speakers, transducers or other audio outputs, a haptic interface or other tactile feedback that provides non-visual and non-audible information to the platform user of the client computing device.

Although FIG. 12 illustrates the processors 1221, 1231 and the memories 1222, 1232 as being within the computing devices 1220, 1230, components described herein can include multiple processors and memories that can operate in different physical locations and not within the same computing device. For example, some of the instructions and the data can be stored on a removable SD card and others within a read-only computer chip. Some or all of the instructions and data can be stored in a location physically remote from, yet still accessible by, the processors. Similarly, the processors can include a collection of processors that can perform concurrent and/or sequential operations. The computing devices can each include one or more internal clocks providing timing information, which can be used for time measurement for operations and programs run by the computing devices.

The server computing device 1220 can be connected over the network 1210 to a data center 1250 housing any number of hardware accelerators 1251-1252. The data center 1250 can be one of multiple data centers or other facilities in which various types of computing devices, such as hardware accelerators 1251-1252, are located. Computing resources housed in the data center 1250 can be specified for deploying GNN models related to proactively preventing failures and ensuring a network safely operates, such as GNNs 210 and 710, as described herein.

The server computing device 1220 can be configured to receive requests to process data from the client computing device 1230 on computing resources in the data center 1250. For example, the environment can be part of a computing platform configured to provide a variety of services to users, through various user interfaces and/or application programming interfaces (APIs) exposing the platform services. The variety of services can include predicting failures and ensuring network safety. The client computing device 1230 can transmit input data associated with such services to GNN system 1100, which can in turn analyze such input data to predict failures and ensure network safety. In some instances, the GNN system 1100 may generate output data identifying predicted failures or network safety concerns and, in some instances, instructions for remedying such.

As other examples of potential services provided by a platform implementing the environment, the server computing device 1220 can maintain a variety of models in accordance with different constraints available at the data center 1250. For example, the server computing device 1220 can maintain different families for deploying models on various types of TPUs and/or GPUs housed in the data center 1250 or otherwise available for processing.

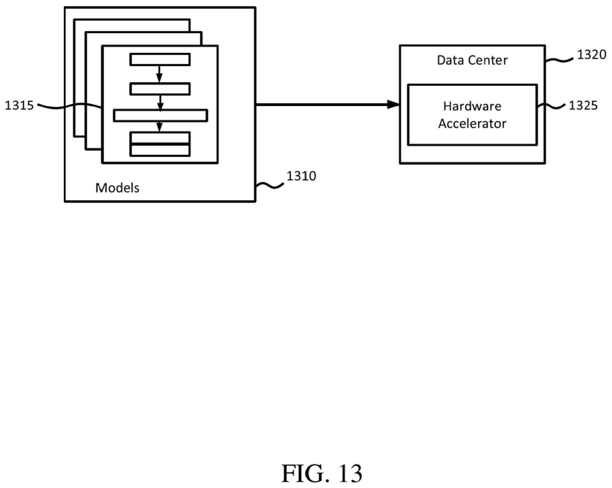

FIG. 13 depicts a block diagram illustrating one or more model architectures 1315, such as for deployment in a data center 1320 housing a hardware accelerator 1325 on which the deployed models 1310 will execute for predicting failures and ensuring network safety. The hardware accelerator can be any type of processor, such as a CPU, GPU, FPGA, or ASIC such as a TPU.

An architecture of a model 1315 can refer to characteristics defining the model, such as characteristics of layers for the model, how the layers process input, or how the layers interact with one another. For example, the model can be a graph neural network, as described herein.

Referring back to FIG. 12, the devices 1220, 1230, and the data center 1250 can be capable of direct and indirect communication over the network 1210. For example, using a network socket, the client computing device 1230 can connect to a service operating in the data center 1250 through an Internet protocol. The devices can set up listening sockets that may accept an initiating connection for sending and receiving information. The network 1210 itself can include various configurations and protocols including the Internet, World Wide Web, intranets, virtual private networks, wide area networks, local networks, and private networks using communication protocols proprietary to one or more companies. The network can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network, in addition or alternatively, can also support wired connections between the devices and the data center, including over various types of Ethernet connection.

Although a single server computing device 1220, client computing device 1230, and data center 1250 are shown in FIG. 12, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device connected to hardware accelerators configured for processing optimization models, and any combination thereof.

Aspects of the disclosure can be implemented in digital electronic circuitry, in tangible computer software or firmware, and/or in computer hardware, such as the structure disclosed herein, their structural equivalents, or combinations thereof. Aspects of the disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read-only memory, random access memory, or combinations thereof, and can perform or execute the instructions. The computer or special purpose logic circuitry can also include, or be operatively coupled to, one or more storage devices for storing data, such as magnetic, magneto-optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer-readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a frontend component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only one of many possible implementations. Further, the same reference numbers in different drawings can identify the same or similar elements.

Neural networks are machine learning models that include one or more layers of nonlinear operations to predict an output for a received input. In addition to an input layer and an output layer, some neural networks include one or more hidden layers. The output of each hidden layer can be input to another hidden layer or the output layer of the neural network. Each layer of the neural network can generate a respective output from a received input according to values for one or more model parameters for the layer. The model parameters can be weights or biases that are determined through a training algorithm to cause the neural network to generate accurate output.

## Claims

1. A system comprising:
one or more computer processors;
a memory in communication with the one or more computer processors, the memory storing instructions that, when executed by the one or more computer processors, causes the one or more computer processors to:
construct one or more temporal network graphs representative of the network;
identify, using a graph neural network (GNN), one or more anomalies within the network based on the one or more temporal network graphs; and
output the one or more anomalies to a frontend interface.

2. The system of claim 1, wherein the GNN is trained, using one or more other temporal network graphs to identify anomalies on a network.

3. The system of claim 2, wherein the instructions further comprise training the GNN.

4. The system of one of claims 1 to 3, wherein the frontend interface provides a real-time overview of the network.

5. The system of one of claims 1 to 4, wherein the instructions further cause the one or more processors to generate state of the network (SOTN) reports that provide information related to the one or more anomalies detected by the GNN.

6. The system of one of claims 1 to 5, wherein the frontend interface provides modules including one or more of autonomous anomaly detection, dependency graph & states, anomaly insights, anomaly explainability, or chat assistant.

7. The system of claim 6, wherein the autonomous anomaly detection module is configured to output an indication of the one or more anomalies within the network; and/or
wherein the dependency graph & states module is configured to provide a visual representation of states of network entities positioned upstream or downstream of a network device associated with at least one of the one or more anomalies; and/or
wherein the anomaly insights module is configured to provide natural language insights about detected anomalies; and/or
wherein the anomaly explainability module is configured to provide various visualizations associated with detected anomalies.

8. A method for determining and providing network anomaly information, the method comprising:
constructing, by one or more processors, one or more temporal network graphs representative of the network;
identifying, by the one or more processors, using a graph neural network (GNN), one or more anomalies within the network based on the one or more temporal network graphs; and
outputting, by the one or more processors, the one or more anomalies to a frontend interface.

9. The method of claim 8, wherein the GNN is trained, using one or more other temporal network graphs to identify anomalies on a network.

10. The method of claim 9, further comprising training the GNN.

11. The method of one of claims 8 to 10, wherein the frontend interface provides a real-time overview of the network.

12. The method of one of claims 8 to 11, further comprising:
generating state of the network (SOTN) reports that provide information related to the one or more anomalies detected by the GNN.

13. The method of one of claims 8 to 12, wherein the frontend interface provides modules including one or more of autonomous anomaly detection, dependency graph & states, anomaly insights, anomaly explainability, or chat assistant.

14. The method of claim 13, wherein the autonomous anomaly detection module is configured to output an indication of the one or more anomalies within the network; and/or
wherein the dependency graph & states module is configured to provide a visual representation of states of network entities positioned upstream or downstream of a network device associated with at least one of the one or more anomalies; and/or
wherein the anomaly insights module is configured to provide natural language insights about detected anomalies, and/or
wherein the anomaly explainability module is configured to provide various visualizations associated with detected anomalies.

15. A computer program comprising computer-readable instructions, which when executed by one or more processors, perform the method of one of claims 8 to 14.
